# EUROPEAN PATENT APPLICATION

(11) **EP 1 583 296 A2**
(43) Date of publication of application: **05.10.2005**
(21) Application number: 05006355.1
(22) Date of filing: 23.03.2005
(51) Int. Cl.: H04L 12/56

(54) **Relay equipment and communication system**

(30) Priority: 31.03.2004 JP 2004103812
(71) Applicant: MATSUSHITA ELECTRIC INDUSTRIAL CO., LTD., Kadoma-shi, Osaka 571-8501 (JP)
(72) Inventor: Ando, Satoshi, Munakata-Gun, Fukuoka-Ken, 811-3217 (JP); Ohmoto, Masao, Kasuya-Gun, Fukuoka-Ken, 811-2416 (JP); Kawaguchi, Yuichi, Kasuya-Gun, Fukuoka-Ken, 811-2413 (JP); Ohura, Masato, Kasuga-Shi, Fukuoka-Ken, 816-0812 (JP); Shimizu, Yuji, Koga-Shi, Fukuoka-Ken, 811-3114 (JP)
(74) Representative: Holmes, Miles Keeton

(57) **Abstract**

The present invention provides improved relay equipment (1) including at least one port (20), through which packet transfer is executable, an information-containing unit (3) containing target-to-be-used information (4) and availability information (5), in which the target-to-be-used information (4) distinguishes the at least one port (20) between a target port for use in the packet transfer and a non-target port therefor, but the availability information (5) distinguishes the at least one port (20) between an usable port for use in the packet transfer and an unusable port therefor, a determining unit (6) operable to determine an available port for use in the packet transfer from the at least one port (20) in accordance with the target-to-be-used information (4) and the availability information (5), and a relaying unit (7) operable to execute the packet transfer through the available port. The improved relay equipment (1) according to the present invention allows for the transfer of only packets having a communication rate equal or smaller than a bandwidth of each transmission link, and packet transfer without packet delay and without packet discard is achievable.

## Description

The present invention relates to improved relay equipment for use in packet transfer, and a communication system.

Packet transfer typical of the Internet and its lower layer or rather Ethernet R is best-effort communication that non-guarantees the arrival of packets at a destination of the packets from a source thereof.

In the packet transfer, resources in a communication link must be reserved to guarantee communication quality.

According to cited reference No. 1, there is disclosed distributed resource reservation. For the cited reference No. 1, refer to RFC2205 "Resource Reservation Protocol (RSVP) Version 1 Functional Specification". The cited reference No. 1 discloses a RSVP (Resource Reservation Protocol).

According to cited reference No. 2, there is disclosed distributed resource reservation as well. For the cited reference No. 2, refer to RFC2814 "SBM (Subnet Bandwidth Manager): A Protocol for RSVP-based Admission Control Over IEEE802-Style Networks". The cited reference No. 2 discloses a DSBM (SubnetBandwidthManager).

According to cited reference No. 3, there is disclosed a method for controlling packet transfer in relay equipment. For the cited reference No. 3, refer to "IP Multicast Network Development Guide Vol. 1" ISBN4-7973-1212-2, pp 405-419, IGMP snooping.

According to cited reference No. 4, there is disclosed a multicast control method in packet transfer in relay equipment. For the cited reference No. 4, refer to "Gigabit Ethernet R Complete Guide" ISBN4-8222-8068-3, pp 57-64, IEEE802.1p: Multicast Pruning.

The above is a control method operable to set up transferred multicast in packet relay equipment in accordance with a GMRP (GARP Multicast Registration Protocol) and GVRP (GARP VLAN Registration Protocol) based on a GARP (Generic Attribute Registration Protocol).

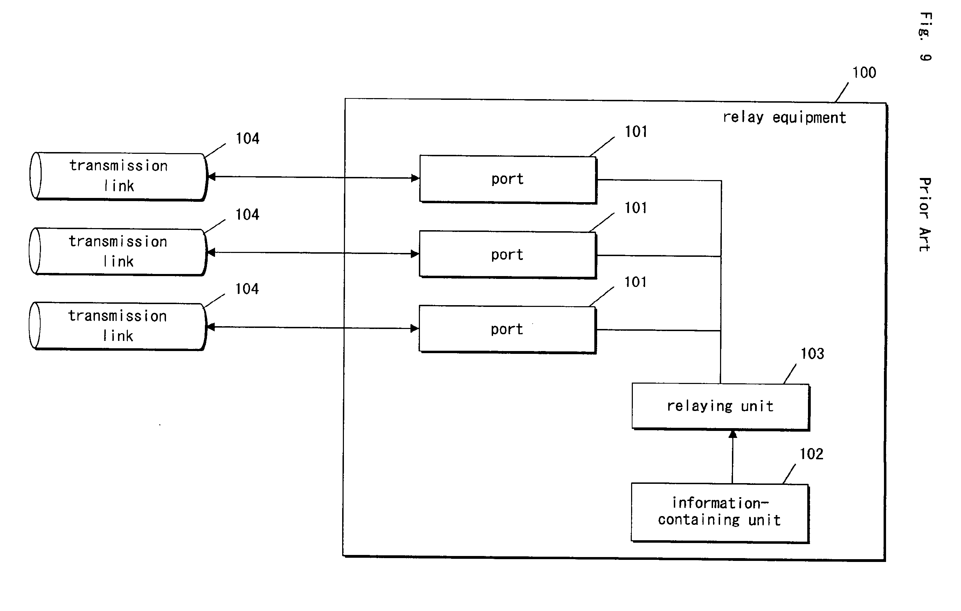

Referring to Fig. 9, prior art relay equipment is illustrated in block diagram form.

The relay equipment 100 includes several ports 101, a relaying unit 103, and an information-containing unit 102. Each of the ports 101 is connected to corresponding one of transmission links 104. Each of the transmission links 104 has a different bandwidth.

The relaying unit 103 is operable to transfer packets through the ports 101. At this time, an available port for use in packet transfer is set according to types of the packets. The information-containing unit 102 contains information on the available port for use in the packet transfer.

The relaying unit 103 is designed to transfer the packets in accordance with the information on the available port for use in the packet transfer.

However, the prior art relay equipment has only the information on the available port for use in the packet transfer, and consequently transfers the packets without regard to a bandwidth of each of the transmission links 104 connected to the ports 101. This entails a problem that packets having a communication rate greater than a bandwidth of each transmission link are objectionably transferred by the prior art relay equipment.

The objectionable transfer of the packets having such a greater transmission rate brings about a further problem of the occurrence of packet delay and packet discard, with a concomitant degradation in communication quality.

The above problems are particularly conspicuous in multicast-based packet transfer because there are cases where the several ports 101 are concurrently used for the packet transfer in the multicast-bases packet transfer.

In view of the above, an object of the present invention is to provide improved relay equipment and a communication system, whereby packet transfer without packet delay and without packet discard is achievable.

A first aspect of the present invention provides relay equipment including at least one port, through which packet transfer is executable, an information-containing unit containing target-to-be-used information and availability information, in which the target-to-be-used information distinguishes the at least one port between a target port for use in the packet transfer and a non-target port for use in the packet transfer, but the availability information distinguishes the at least one port between an usable port for use in the packet transfer and an unusable port for use in the packet transfer, a determining unit operable to determine an available port for use in the packet transfer from the at least one port in accordance with the target-to-be-used information and the availability information, and a relaying unit operable to execute the packet transfer through the available port.

The above structure selects the available port from both of the target-to-be-used information and the availability information.

A second aspect of the present invention provides relay equipment, wherein the available port is the target port for use in the packet transfer and the usable port for use in the packet transfer as well.

The above structure provides packet transfer through a proper port without allowing a target, but unusable port for use in the packet transfer to be selected as an available port.

A third aspect of the present invention provides relay equipment, further including an information-registering unit operable to perform at least one of steps of registering, erasing, and updating the information in the information-containing unit.

The above structure overwrites both of the target-to-be-used information and the availability information when necessary. As a result, a proper piece of information is referenced for each packet.

A fourth aspect of the present invention provides relay equipment, wherein the information-containing unit includes an information table operable to contain at least part of the target-to-be-used information and the availability information.

The above structure allows the table to contain the information, and allows for easy reference to the information at the table.

A fifth aspect of the present invention provides relay equipment including at least one port, through which packet transfer is executable via a transmission link, an information-containing unit containing target-to-be-used information, communication rate information on a packet communication rate, and bandwidth information on a bandwidth of the transmission link, in which the target-to-be-used information distinguishes the at least one port between a target port for use in the packet transfer and a non-target port for use in the packet transfer, a determining unit operable to generate availability information based on both of the communication rate information and the bandwidth information, in which the availability information distinguishes the at least one port between an usable port for use in the packet transfer and an unusable port for use in the packet transfer, whereby the determining unit determines an available port for use in the packet transfer from the at least one port in accordance with the target-to-be-used information and the availability information, and a relaying unit operable to execute the packet transfer through the available port.

The above structure selects, as an available port, only a target and usable port for use in the packet transfer. As a result, only packets having a communication rate equal or smaller than a bandwidth of each transmission link are transferred without packet delay and without packet discard.

A sixth aspect of the present invention provides relay equipment, wherein the determining unit generates the availability information in accordance with a comparison between the packet communication rate and the bandwidth of the transmission link.

The above structure selects, as an available port, only a port connected to each transmission link having a bandwidth equal or greater than a communication rate of packets to be transferred. As a result, only packets having a communication rate equal or smaller than the bandwidth of each of the transmission links are transferred without packet delay and without packet discard.

A seventh aspect of the present invention provides a communication system including relay equipment and a management unit operable to communicate a signal to the relay equipment, in which the relay equipment includes at least one port, through which packet transfer is executable, an information-containing unit containing target-to-be-used information and availability information, in which the target-to-be-used information distinguishes the at least one port between a target port for use in the packet transfer and a non-target port for use in the packet transfer, but the availability information distinguishes the at least one port between an usable port for use in the packet transfer and an unusable port for use in the packet transfer, a determining unit operable to determine an available port for use in the packet transfer from the at least one port in accordance with the target-to-be-used information and the availability information, and a relaying unit operable to execute the packet transfer through the available port. The management unit includes a distinguishing unit operable to distinguish the at least one port between the usable port for use in the packet transfer and the unusable port for use in the packet transfer, thereby providing a result from distinction made by the distinguishing unit, and to notify the information-containing unit of the result from the distinction.

The above structure selected, as an available port, only a target and usable port for use in the packet transfer. As a result, only packets having a communication rate equal or smaller than a bandwidth of each transmission link are transferred without packet delay and without packet discard.

An eighth aspect of the present invention provides a communication system, in which the management unit includes a storage unit operable to store communication rate information on a packet communication rate, and bandwidth information on a bandwidth of each transmission link.

The above structure assures the information distinguishing several ports in the relay equipment between a usable port for use in the packet transfer and an unusable port for use in the packet transfer.

A ninth aspect of the present invention provides a communication system, in which the distinguishing unit distinguishes the at least one port between the usable port for use in the packet transfer and the unusable port for use in the packet transfer in accordance with both of the communication rate information and the bandwidth information in the storage unit.

The above structure provides the management unit operable to distinguish several ports in the relay equipment between a usable port for use in the packet transfer and an unusable port for use in the packet transfer in accordance with a packet communication rate and a bandwidth of each transmission link.

A tenth aspect of the present invention provides a communication system, in which the relay equipment includes a communication unit operable to communicate information to the management unit, and the distinguishing unit notifies the information-containing unit through the communication unit of the result from the distinction made by the distinguishing unit.

The above structure allows the relay equipment to obtain the information distinguishing several ports in the relay equipment between a usable port for use in the packet transfer and an unusable port for use in the packet transfer, whereby an available port for use in the packet transfer is properly selected. As a result, packet transfer without packet delay and without packet discard is achievable.

The above, and other objects, features and advantages of the present invention will become apparent from the following description read in conjunction with the accompanying drawings, in which like reference numerals designate the same elements.
Fig. 1 is a block diagram illustrating one type of relay equipment according to a first embodiment of the present invention;
Fig. 2(a) is an illustration showing target-to-be-used information according to the first embodiment;
Fig. 2(b) is an illustration showing availability information according to the first embodiment;
Fig. 3 is a block diagram illustrating another type of relay equipment according to the first embodiment;
Fig. 4 is a block diagram illustrating a further type of relay equipment according to the first embodiment;
Fig. 5 is a block diagram illustrating a communication system according to the first embodiment;
Fig. 6 is an illustration showing a flow of communication processing steps according to the first embodiment;
Fig. 7 is a block diagram illustrating a communication system according to a second embodiment;
Fig. 8 is a block diagram illustrating the communication system according to the second embodiment; and
Fig. 9 is a block diagram illustrating prior art relay equipment.

Preferred embodiments of the present invention are now described with reference to the accompanying drawings.

It is to be noted that relay equipment discussed herein may be every kind of a packet-transferring apparatus.

### (First embodiment)

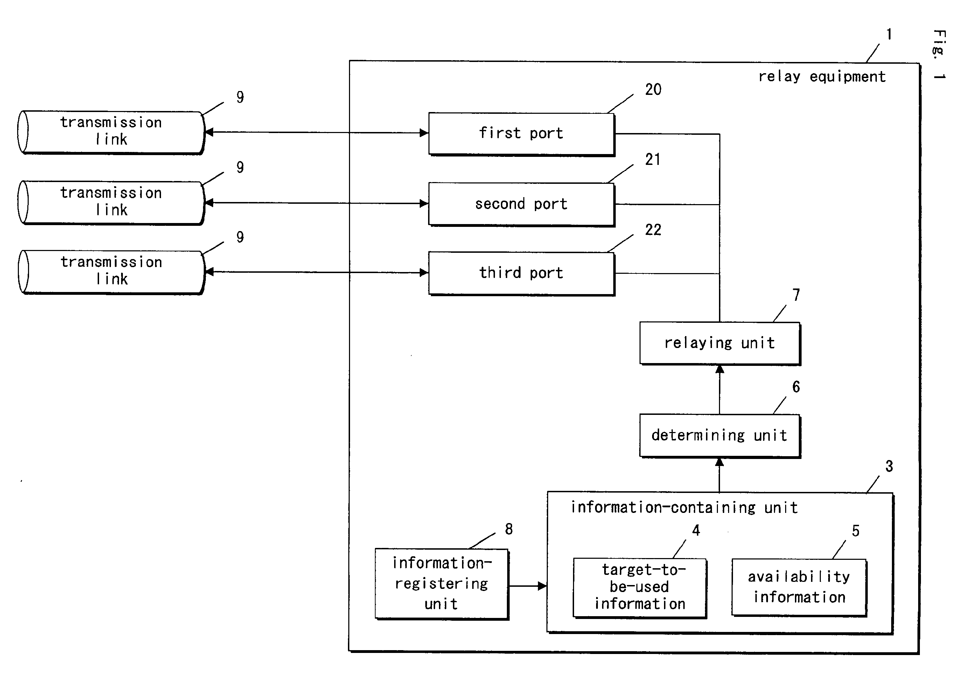

A first embodiment is now described with reference to Fig. 1 to Fig. 4.

Referring to Fig. 1, one type of relay equipment according to the present embodiment is illustrated in block diagram form.

The relay equipment 1 includes at least one port and, more specifically, three ports (a first port 20, a second port 21, and a third port 22) according to the present embodiment. The first, second, and third ports 20, 21, and 22 are connected to different transmission links 9. Each of the transmission links 9 has a different bandwidth.

Each of the transmission links 9 is a line operable to connect the relay equipment 1 or other terminals thereto either by radio or through a cable. A cable transmission link includes cable Ethernet R and a power line communication. A wireless transmission link includes wireless Ethernet R and Bluethooth-based communication. Each of the transmission links 9 may be of a half-duplex or otherwise full-duplex communication system.

An information-containing unit 3 contains target-to-be-used information 4 and availability information 5. The target-to-be-used information 4 distinguishes the first to third ports 20, 21, and 22 between a target port for use in packet transfer and a non-target port for use in the packet transfer. The availability information 5 distinguishes the first to third ports 20, 21, and 22 between a usable port for use in the packet transfer and an unusable port for use in the packet transfer.

The target-to-be-used information 4 and availability information 5 are varied in content according to packets to be transferred.

In the information-containing unit 3, the target-to-be-used information 4 and availability information 5 are placed in format based on a destination address of each of the packets to be transferred.

An information-registering unit 8 is operable to execute at least one of the steps of registering, erasing, and updating the information in the information-containing unit 3. For example, the information-registering unit 8 updates a piece of the target-to-be-used information 4 on a packet to be transferred, or registers a piece of the availability information 5 on the aforesaid packet.

A determining unit 6 is operable to determine an available port for use in packet transfer in accordance with both of the target-to-be-used information 4 and the availability information 5. More specifically, a port satisfied by both a target port for use in the packet transfer and a usable port for use in the packet transfer is determined as an available port by the determining unit 6, in which the target port and the usable port are placed in the target-to-be-used information 4 and the availability information 5, respectively.

A relaying unit 7 is operable to transfer packets through the available port determined by the determining unit 6. The packet transfer executed by the relaying unit 7 allows for simultaneous transfer of the same packets to several terminals from the relay equipment 1. As a result, multicast system-based packet transfer is achievable, in which, e.g., several terminals (nodes) are collectively used to execute the packet transfer.

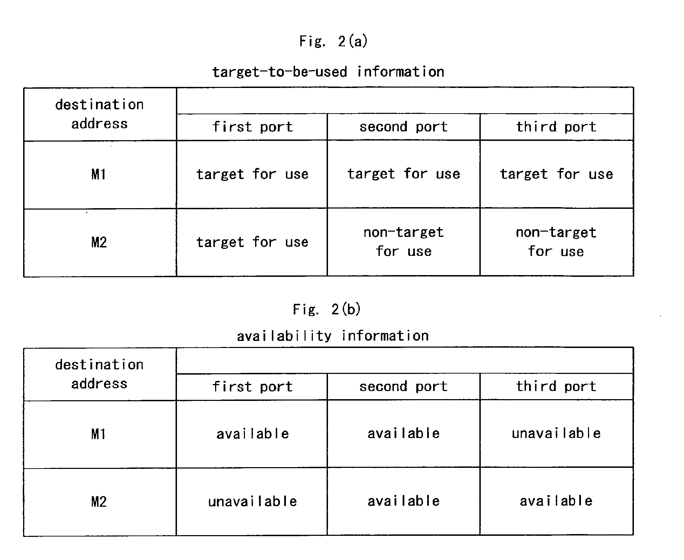

A process of determining the available port for use in the packet transfer is now described with reference to Fig. 2.

Referring to Fig. 2(a), the target-to-be-used information according to the present embodiment is illustrated. Referring to Fig. 2(b), the availability information according to the present embodiment is illustrated.

The target-to-be-used information contains information on each target port for use in transferring packets having a destination address.

As illustrated in Fig. 2(a), with packets having the destination address "M1", all of the first to third ports 20, 21, and 22 are targets for use in the packet transfer; however, with packets having the destination address "M2", only the first port 20 is a target for use in the packet transfer, and the remaining second and third ports 21, 22 are non-targets for use in the packet transfer.

As seen from Fig. 2(b), with the packets having the destination address "M1", the first and second ports 20, 21 except for the third port 22 are usable ports for use in the packet transfer, but with the packets having the destination address "M2", the second and third ports 21, 22 except for the first port 20 are usable ports for use in the packet transfer.

The determining unit 6 determines an available port for use in the packet transfer in accordance with both of the target-to-be-used information 4 and the availability information 5. Pursuant to the present embodiment, with the packets having the destination address "M1", the first and second ports 20, 21 are the targets for use in the packet transfer, and are the usable ports therefor as well. Accordingly, the determining unit 6 determines the first and second ports 20, 21 as available ports for use in the packet transfer.

With the packets having the destination address "M2", there are neither target ports for use in the packet transfer nor usable ports therefor. Accordingly, the determining unit 6 determines that all of the ports 20, 21, and 22 are non-available ports for use in the packet transfer.

The relaying unit 7 permits the packets having the destination address "M1" to be transferred through the first and second ports 20, 21 in response to the determination from the determining unit 6, but intercepts the transfer of the packets having the destination address "M2".

The above processing steps disallow the use of a target, but unusable port for use in the packet transfer. For example, a port connected to a transmission link having a bandwidth smaller than a packet transmission rate is unused for the packet transfer. As a result, packet transfer without packet delay and without packet discard is achievable.

The availability information 5 may be set solely according to a destination address, or otherwise may be set according to a relationship between a communication rate of packets to be transferred, and a bandwidth of each communication link.

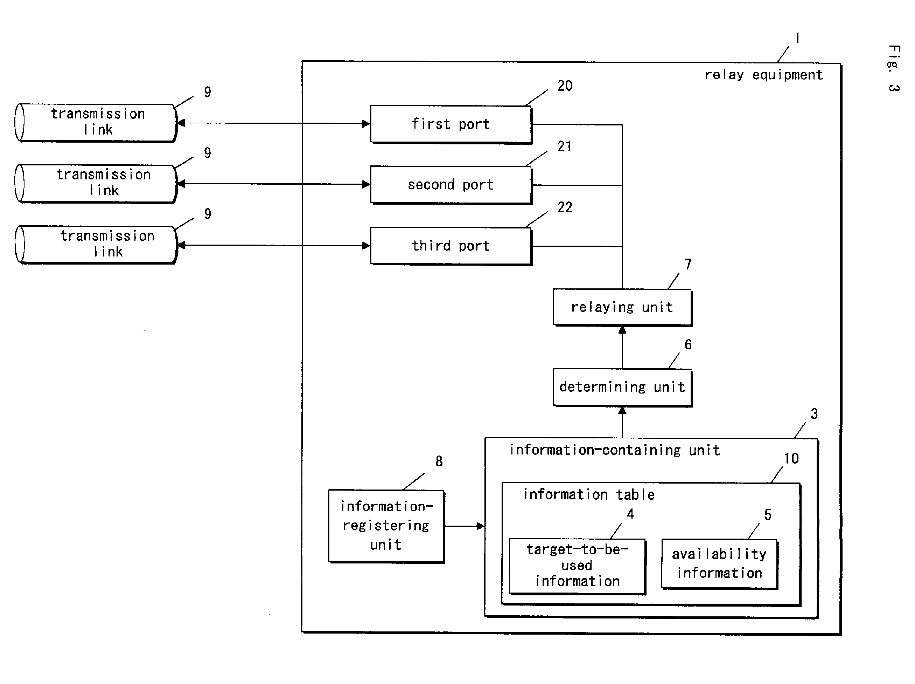

As illustrated in Fig. 3, at least part of the target-to-be-used information 4 and availability information 5 may be placed in an information table 10.

Referring to Fig. 3, another type of relay equipment 1 according to the present embodiment is illustrated in block diagram form. An information-containing unit 3 includes the information table 10 operable to contain the aforesaid information.

The information table 10 contains the information, and allows for easy registering, erasing and updating of the information.

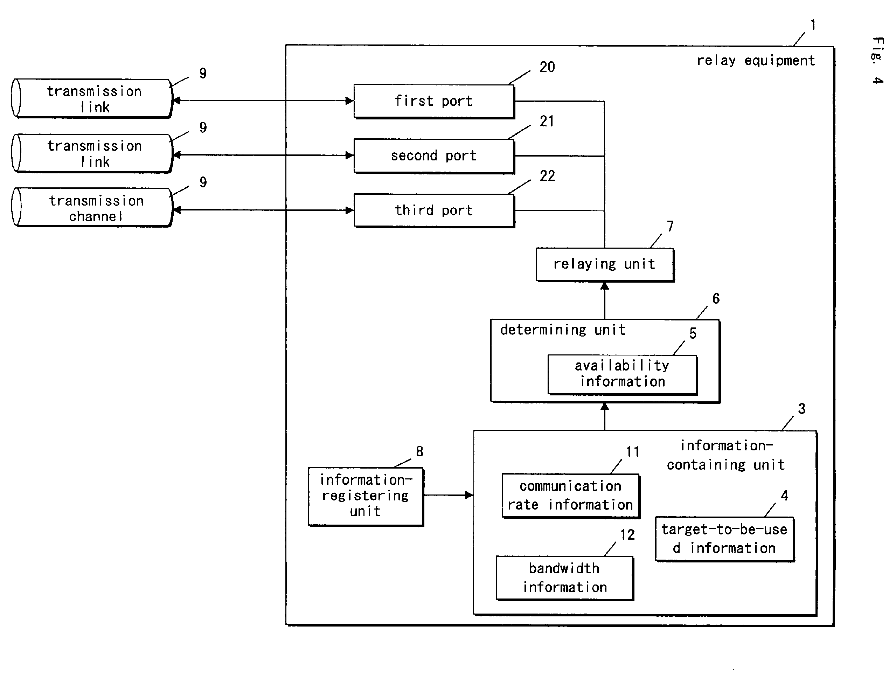

A further type of relay equipment 1 according to the present embodiment is now described with reference to Fig. 4. This type of relay equipment 1 is operable to determine an available port for use in packet transfer in accordance with availability information obtained based on information different from that as discussed in Fig. 2(b), and target-to-be-used information.

Referring to Fig. 4, the different type of relay equipment 1 according to the present embodiment is illustrated.

An information-containing unit 3 contains target-to-be-used information 4, communication rate information 11, and bandwidth information 12. The target-to-be-used information 4 includes information on target and non-target ports for use in the packet transfer. The communication rate information 11 includes information on communication rates of packets to be transferred. The bandwidth information 12 includes information on bandwidths of transmission links 9 connected to the ports.

A determining unit 6 is operable to generate availability information 5 on usable and unusable ports for use in the packet transfer on the basis of both of the communication rate information 11 and the bandwidth information 12 in the information-containing unit 3.

A port connected to a transmission link having a bandwidth equal or greater than a communication rate of packets to be transferred is determined by the determining unit 6 as a usable port for use in the packet transfer. Meanwhile, a port connected to a transmission link having a bandwidth smaller than the communication rate of the packets to be transferred is determined by the determining unit 6 as an unusable port for use in the packet transfer.

The determining unit 6 generates the availability information 5 based on results from the determination.

Similarly to the processing steps as shown in Fig. 2, the determining unit 6 determines a target and usable port for use in the packet transfer, i.e., an available port for use in the packet transfer, in accordance with the generated availability information 5 and the target-to-be-used information 4.

The relaying unit 7 transfers the packets through the available port as determined above.

The above processing steps allow for packet transfer through only a port connected to each transmission link having a bandwidth falling within the range of a packet communication rate. This feature transmits the packets without packet delay and without packet discard.

For example, assume that the first, second, and third ports 20, 21, and 22 are connected to a transmission link having the bandwidth 100 Mbps, another transmission link having the bandwidth 50 Mbps, and a further transmission link having the bandwidth 10 Mbps, respectively. Further assume that each of the packets to be transferred has the communication rate 40 Mbps. In this instance, the first and second ports 20, 21 are usable ports for use in the packet transfer.

The third port 22 is an unusable port for use in the packet transfer, and is non-selected as an available port for use in the packet transfer. Therefore, the third port 22 is unused for the packet transfer. As a result, all transmission links having bandwidths smaller than the communication rate 40 Mbps are unused. This feature realizes the packet transfer without packet delay and without packet discard.

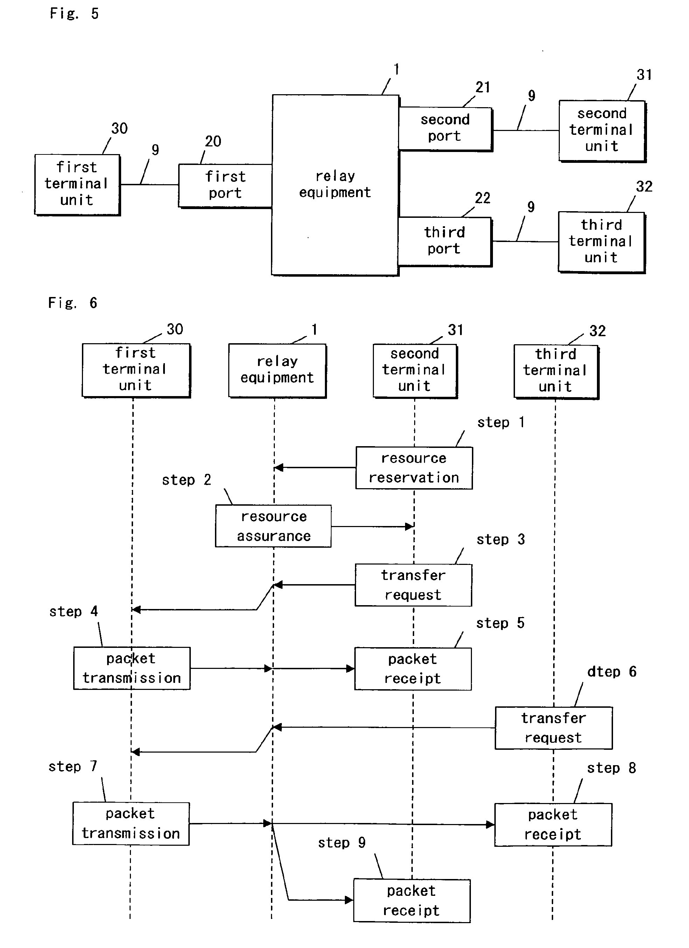

A process of transferring the packets from the relay equipment 1 to terminal units is now described with reference to Fig. 5 and Fig. 6.

Referring to Fig. 5, a communication system according to the present embodiment is illustrated in block diagram form. Referring to Fig. 6, a flow of communication-processing steps according to the present embodiment is illustrated.

The relay equipment 1 includes the first, second, and third ports 20, 21, and 22. The first port 20 is connected to a first terminal unit 30 through the transmission link 9. The second port 21 is connected to a second terminal unit 31 through the transmission link 9. The third port 22 is connected to a third terminal unit 32 through the transmission link 9.

The relay equipment 1 executes packet transfer between the connected terminal units. For example, the relay equipment 1 transfers packets from the first terminal unit 30 to both of the second and third terminal units 31, 32, or otherwise to only the second terminal unit 31.

The packet transfer is now described as an illustration with reference to Fig. 6.

Referring to Fig. 6, a flow of processing steps is illustrated for executing the packet transfer in the communication system of Fig. 5.

At step 1, the second terminal unit 31 addresses a resource reservation request to the relay equipment 1. At step 2, the relay equipment 1 assures resources in response to the request from the second terminal unit 31. At step 3, the second terminal unit 31 addresses a transfer request to the relay equipment 1 to transfer packets from the first terminal unit 30 to the second terminal unit 31.

At step 4, the first terminal unit 30 transmits the packets to the relay equipment 1, and the relay equipment 1 transfers the received packets to the second terminal unit 31. More specifically, the relay equipment 1 transfers the packets through the second port 21. At step 5, the second terminal unit 31 receives the transferred packets.

At step 6, the third terminal unit 32 addresses a transfer request to the relay equipment 1 to transfer packets from the first terminal unit 30 to both of the second and third terminal units 31, 32.

At step 7, the first terminal unit 30 transmits the packets to the relay equipment 1. The relay equipment 1 transfers the received packets to both of the second and third terminal units 31, 32. At this time, the relay equipment 1 ascertains in advance that each of the second and third ports 21, 22 connected to the second and third terminal units 31, 32, respectively, is a target and usable port for use in the packet transfer. The relay equipment 1 determines each of the second and third ports 21, 22 as an available port for use in the packet transfer in accordance with the ascertainment before starting the packet transfer.

The available port for use in the packet transfer is determined based on availability information obtained by a comparison between a bandwidth of each of the transmission links and a communication rate of the packets to be transferred, and target-to-be-used information.

As described above, pursuant to the present embodiment, the relay equipment 1 determines an available port for use in the packet transfer before executing actual packet transfer. Such processing steps allow for the transfer of only packets having a communication rate equal or smaller than a bandwidth of each of the transmission links. This feature transmits the packets without packet delay and without packet discard.

### (Second embodiment)

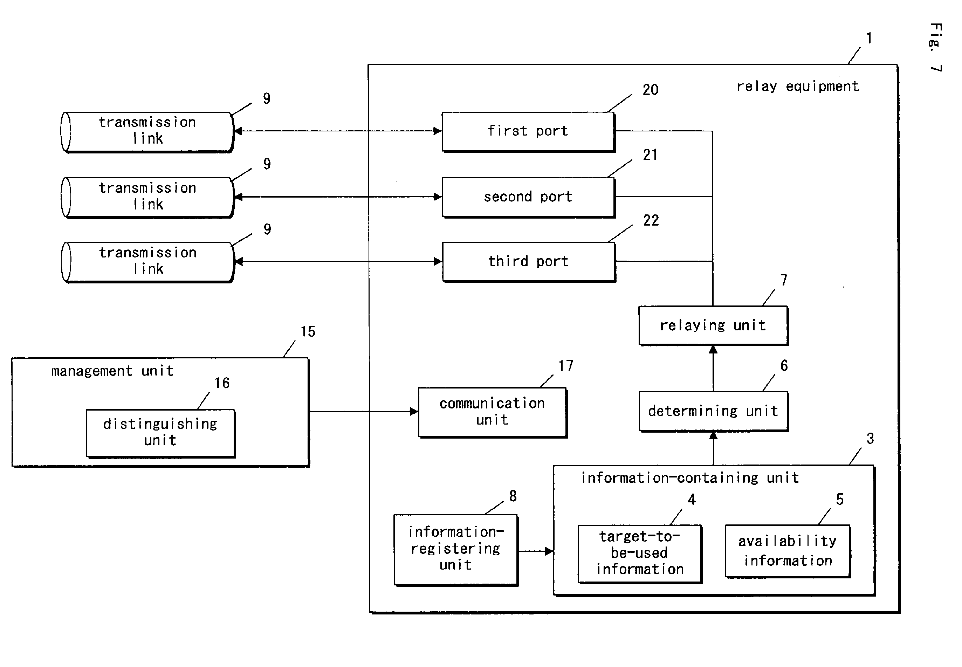

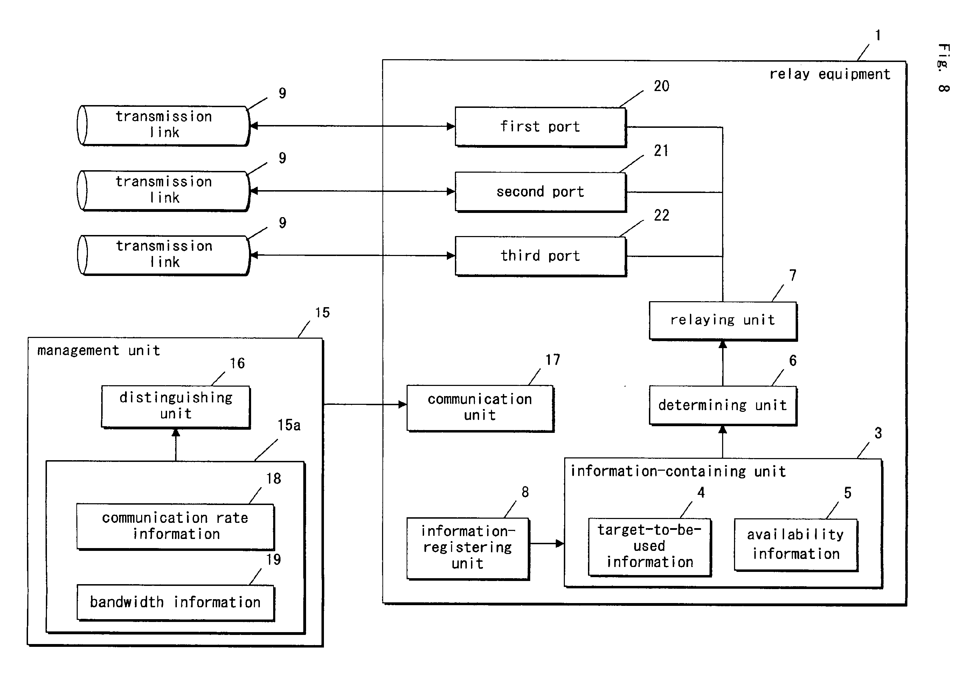

A second embodiment is now described with reference to Fig. 7 and Fig. 8. Referring to Fig. 7 and Fig. 8, a communication system according to the present embodiment is illustrated in block diagram form.

The present embodiment is directed to the communication system in which relay equipment is provided with a management unit.

The management unit 15 communicates signals to the relay equipment 1. The management unit 15 includes a distinguishing unit 16 operable to distinguish several ports in the relay equipment 1 between a usable port for use in packet transfer and an unusable port for use in the packet transfer, thereby providing results from the distinction made by the distinguishing unit 16, and to notify the relay equipment I of the results from the distinction. At this time, a communication unit 17 relays the distinction results from the distinguishing unit 16 to the relay equipment 1. The relayed distinction results are placed as availability information 5 into an information-containing unit 3.

More specifically, the distinguishing unit 16 distinguishes the usable port for use in the packet transfer from the unusable port for use in the packet transfer in accordance with communication rate information 18 and bandwidth information 19 in the management unit 15. The communication rate information 18 is concerned with a communication rate of transferred packets. The bandwidth information 19 is concerned with a bandwidth of each of transmission links 9 connected to the ports. In addition, the communication rate information 18 and the bandwidth information 19 are stored in a storage unit 15a, which is provided in the management unit 15.

For example, assume that packets to be transferred have the communication rate 50 Mbps. Further assume that a transmission link 9 having the bandwidth 100 Mbps, another transmission link 9 having the bandwidth 50 Mbps, and a further transmission link 9 having the bandwidth 30 Mbps are connected to the first, second, and third ports 20, 21, and 22, respectively. In this instance, each of the first and second ports 20, 21 is a usable port for use in the packet transfer, but the third port 22 is an unusable port therefor.

A determining unit 6 is operable to determine an available port for use in the packet transfer on the basis of the availability information 5 and target-to-be-used information 4. A relaying unit 7 is operable to transfer the packets through the determined available port. At this time, a target, but unusable port for use in the packet transfer is non-selected as the available port therefor.

As described above, pursuant to the present embodiment, the results from the distinction made by the distinguishing unit 16 as discussed above are transmitted to the relay equipment 1, in which proper packet transfer is executable based on the aforesaid distinction results that operate as the availability information 5.

More specifically, the present embodiment allows for the transfer of only packets having a communication rate equal or smaller than a bandwidth of each of the transmission links, whereby packet transfer without packet delay and without packet discard is achievable.

The communication rate information 18 and the bandwidth information 19 may alternatively be placed in another medium to permit the management unit 15 to distinguish a usable port for use in the packet transfer from an unusable port therefor on the basis of both of the communication rate information 18 and the bandwidth information 19 therein.

The management unit 15 not exclusively distinguishes the usable port for use in the packet transfer from the unusable port therefor, but may alternatively distinguish a target port for use in the packet transfer from a non-target port therefor to notify the relay equipment 1 of results from the distinction made by the distinguishing unit 16.

As a further alternative, the management unit 15 may contain both of the target-to-be-used information 4 and the availability information 5 to notify the relay equipment 1 of these pieces of information.

The above-described function of the management unit 15 to distinguish the usable port for use in the packet transfer from the unusable port therefor may be exercised similarly in a communication system that includes several pieces of relay equipment. As a result, in the communication system, each piece of the relay equipment is operated with a lighter burden imposed thereon, and is rendered smaller in size.

The target-to-be-used information 4 and availability information 5 on the ports in the packet transfer may alternatively be determined based on packet addresses or otherwise upper protocol information such as protocol classification and packet priority.

The present invention allows for the transfer of only packets having a transmission rate falling within the range of a bandwidth of each of the transmission links. This feature allows the packets to be relayed and transferred without packet delay and without packet discard.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. Relay equipment comprising:
at least one port (20), through which packet transfer is executable;
an information-containing unit (3) containing target-to-be-used information (4) and availability information (5), the target-to-be-used information (4) distinguishing said at least one port (20) between a target port for use in the packet transfer and a non-target port for use in the packet transfer, the availability information (5) distinguishing said at least one port (20) between an usable port for use in the packet transfer and an unusable port for use in the packet transfer;
a determining unit (6) operable to determine an available port for use in the packet transfer from said at least one port (20) in accordance with the target-to-be-used information (4) and the availability information (5); and
a relaying unit (7) operable to execute the packet transfer through said available port.

2. Relay equipment as defined in claim 1, wherein said available port is said target port for use in the packet transfer and said usable port for use in the packet transfer as well.

3. Relay equipment as defined in claim 1, further comprising:
an information-registering unit (8) operable to perform at least one of steps of registering, erasing, and updating the information in said information-containing unit (3).

4. Relay equipment as defined in claim 1, wherein said information-containing unit (3) includes an information table (10) operable to contain at least part of the target-to-be-used information (4) and the availability information (5).

5. Relay equipment comprising:
at least one port (20), through which packet transfer is executable via a transmission link;
an information-containing unit (3) containing target-to-be-used information (4), communication rate information (11) on a packet communication rate, and bandwidth information (12) on a bandwidth of the transmission link, the target-to-be-used information (4) distinguishing said at least one port (20) between a target port for use in the packet transfer and a non-target port for use in the packet transfer;
a determining unit (6) operable to generate availability information (5) based on both of the communication rate information (11) and the bandwidth information (12), the availability information (5) distinguishing said at least one port (20) between an usable port for use in the packet transfer and an unusable port for use in the packet transfer, whereby said determining unit (6) determines an available port for use in the packet transfer from said at least one port (20) in accordance with the availability information (5) and the target-to-be-used information (4); and
a relaying unit (7) operable to execute the packet transfer through said available port.

6. Relay equipment as defined in claim 5, wherein said determining unit (6) generates the availability information (5) in accordance with a comparison between the packet communication rate and the bandwidth of the transmission link.

7. A communication system comprising:
relay equipment (1); and
a management unit (15) operable to communicate a signal to said relay equipment (1),
wherein said relay equipment (1) comprises:
at least one port (20), through which packet transfer is executable;
an information-containing unit (3) containing target-to-be-used information (4) and availability information (5), the target-to-be-used information (4) distinguishing said at least one port (20) between a target port for use in the packet transfer and a non-target port for use in the packet transfer, the availability information (5) distinguishing said at least one port (20) between an usable port for use in the packet transfer and an unusable port for use in the packet transfer;
a determining unit (6) operable to determine an available port for use in the packet transfer from said at least one port (20) in accordance with the target-to-be-used information (4) and the availability information (5); and
a relaying unit (7) operable to execute the packet transfer through said available port,
wherein said management unit (15) includes a distinguishing unit (16) operable to distinguish said at least one port (20) between said usable port for use in the packet transfer and said unusable port for use in the packet transfer, thereby providing a result from distinction made by said distinguishing unit (16), and to notify said information-containing unit (3) of the result from the distinction.

8. A communication system as defined in claim 7, wherein said management unit (15) includes a storage unit (15a) operable to store communication rate information (18) on a packet communication rate, and bandwidth information (19) on a bandwidth of each transmission link.

9. A communication system as defined in claim 8, wherein said distinguishing unit (16) distinguishes said at least one port (20) between said usable port for use in the packet transfer and said unusable port for use in the packet transfer in accordance with both of the communication rate information (18) and the bandwidth information (19) in said storage unit.

10. A communication system as defined in claim 7, wherein said relay equipment (1) includes a communication unit (17) operable to communicate information to said management unit (15), and wherein said distinguishing unit (16) notifies said information-containing unit (3) through said communication unit (17) of the result from the distinction made by said distinguishing unit (16).
